# FASCICULE DE BREVET EUROPEEN

(11) **EP 1 963 657 B1**
(45) Date de publication et mention de la délivrance du brevet: **24.11.2010**
(21) Numéro de dépôt: 06842151.0
(22) Date de dépôt: 13.12.2006
(51) Int. Cl.: F02M 25/07, F02B 29/04, F02M 31/10, F01P 7/16

(54) **DISPOSITIF DE REFROIDISSEMENT DE L'AIR D'ADMISSION ET DES GAZ D'ECHAPPEMENT RECIRCULES**
VORRICHTUNG ZUR KÜHLUNG VON EINLASSLUFT UND RÜCKGEFÜHRTER ABGASE
DEVICE FOR COOLING INTAKE AIR AND RECYCLED EXHAUST GASES

(30) Priorité: 22.12.2005 FR 0513184
(43) Date de publication de la demande: 03.09.2008
(73) Titulaire: Renault SAS, 92100 Boulogne Billancourt (FR)
(72) Inventeur: ROUAUD, Cedric, F-78000 Versailles (FR); YU, Robert, F-78990 Elancourt (FR)
(86) Numéro de dépôt international: PCT/FR2006/051341
(87) Numéro de publication internationale: WO 2007/074264

(56) Documents cités:
- DE-A1- 4 240 239
- DE-A1- 19 633 190
- DE-A1-102005 004 778
- US-A- 4 207 848

## Description

La présente invention concerne un dispositif de refroidissement de l'air d'admission d'un moteur et des gaz d'échappement recirculés émis par ledit moteur à plusieurs niveaux de températures, notamment d'un moteur à combustion interne suralimenté.

Pour respecter les normes d'émissions polluantes actuelles et futures des moteurs de type Diesel ou essence suralimentés, et notamment diminuer les émissions d'oxydes d'azote NOx tout en évitant ou limitant l'utilisation de systèmes de post-traitement coûteux de type piège à NOx, il est connu de refroidir les gaz d'échappement recirculés, communément appelé gaz EGR (de l'anglais Exhaust Gas Recycling), ainsi que l'air à l'admission du moteur qui est issu, pour les moteurs suralimentés, d'un compresseur mécanique ou d'un turbocompresseur. Les gaz EGR peuvent être prélevés en amont de la turbine pour un moteur turbocompressé ou en aval des systèmes de post-traitement (catalyseur d'oxydation, filtre à particules, pièges à NOx), ces derniers étant en aval de la turbine.

Le refroidissement des gaz EGR est réalisé classiquement grâce à une circulation de liquide de refroidissement au sein d'un échangeur EGR/ liquide de refroidissement à contre-courant. La température du liquide de refroidissement peut être d'environ 90 °C lorsque le liquide de refroidissement est issu du circuit de refroidissement du moteur thermique, ou de l'ordre de 50-60 °C lorsqu'il est issu d'un circuit de refroidissement basse température séparé du circuit de refroidissement du moteur thermique. L'air d'admission ou air de suralimentation est classiquement refroidi via un échangeur air de suralimentation/air extérieur ou un échangeur air de suralimentation/ liquide de refroidissement, le liquide de refroidissement étant alors issu d'un circuit à basse température. À titre d'exemple, le document brevet FR 2 847 004 décrit un dispositif de régulation thermique qui comprend un échangeur thermique unique intégrant des canaux de circulation d'un fluide caloporteur, eL recevant séparément le flux d'air d'admission et le flux de gaz EGR. Ces canaux sont connectés à un circuit de refroidissement à basse température comprenant une pompe et un radiateur basse température pour refroidir lesdits flux. Dans certaines conditions de roulage du véhicule, ces canaux peuvent être connectés au circuit de refroidissement du moteur pour réchauffer l'air d'admission, et éventuellement refroidir les gaz EGR.

Le refroidissement des flux gazeux uniquement par un circuit de refroidissement basse température, nécessite un radiateur basse température de taille importante, du fait de la faible différence de température entre l'air extérieur (jusqu'à 45°C) et le liquide de refroidissement. Ce radiateur basse température, placé sous le capot en amont du radiateur haute température sur l'écoulement d'air, crée un masque chaud et aéraulique en amont du radiateur haute température (il crée une perte de charge sur le circuit d'air de refroidissement, autrement dit il diminue le débit d'air de refroidissement des échangeurs en face avant du véhicule). Ce masque chaud affecte les performances.du circuit haute température, et nécessite généralement une augmentation de la taille du radiateur haute température. De plus, dans le cas où le véhicule est climatisé, le radiateur basse température crée un masque chaud devant le condenseur du circuit t de climatisation, et par conséquent diminue les performances de ce dernier. Enfin, les puissances thermiques élevées, prélevées aux flux gazeux via les échangeurs puis dissipées par le radiateur basse température vers l'air extérieur, sont perdues. Ces dispositifs de refroidissement ne permettent donc pas d'utiliser les puissances thermiques dissipées de manière rationnelle, notamment pour améliorer le chauffage ou le préchauffage d'autres organes du Groupe Moto-Propulseur qui nécessitent pourtant d'atteindre des températures de fonctionnement nominales le plus rapidement possible lors du démarrage, et de les conserver en roulage. Un autre example est proposé par le document brevet DE-102005004778

Le but de la présente invention est de proposer une solution visant à pallier les inconvénients précités, qui permette un refroidissement efficace de l'air d'admission et des gaz EGR.

A cet effet, la présente invention a pour objet un dispositif de refroidissement de l'air d'admission d'un moteur et des gaz d'échappement recirculés émis par ledi.t moteur selon la revendication 1, notamment d'un moteur à combustion interne suralimenté, ledit dispositif comprenant
- un premier circuit de refroidissement haute température, comprenant une boucle équipée d'un radiateur haute température et de moyens de circulation d'un liquide de refroidissement à haute température entre ledit radiateur haute température et le moteur,
- un deuxième circuit de refroidissement basse température, comprenant une boucle équipée d'un radiateur basse température et de moyens de circulation d'un liquide de refroidissement à basse température, à une température inférieure à celle du liquide de refroidissement haute température, et
- des moyens d'échange thermique entre d'une part lesdits liquides de refroidissement et d'autre part l'air d'admission et les gaz d'échappement recirculés, **caractérisé en ce que** lesdits moyens d'échange thermique comprennent des premiers moyens d'échange thermique et des seconds moyens d'échanges thermiques séparés, à au moins deux niveaux de température, destinés à être traversés respectivement par l'air d'admission et les gaz d'échappement recirculés, lesdits premiers et seconds moyens d'échange thermique comprenant chacun, d'amont en aval par rapport au flux gazeux le traversant, au moins une partie haute température, reliée par des premiers moyens de raccordement au circuit de refroidissement haute température, pour faire circuler dans ladite première partie le liquide de refroidissement haute température, et une partie basse température reliée par des seconds moyens de raccordement au circuit de refroidissement basse température pour faire circuler dans ladite deuxième partie le liquide de refroidissement basse température.

Les premiers moyens d'échanges thermiques sont montés sur le circuit d'air d'admission du moteur de sorte que l'air d'admission allant au moteur traverse la première partie haute température pour un premier stade de refroidissement, puis la deuxième partie basse température pour un deuxième stade de refroidissement. De même lesdits seconds moyens d'échanges thermiques sont montés sur le circuit de gaz EGR de sorte que les gaz EGR traversent la première partie haute température pour un premier stade de refroidissement puis la deuxième partie basse température pour un deuxième stade de refroidissement.

L'utilisation selon l'invention de moyens d'échange thermique à plusieurs températures de refroidissement, raccordés au circuit de refroidissement haute température du moteur et à un circuit de refroidissement basse température, permet
- de refroidir efficacement les gaz EGR et l'air d'admission, le circuit haute température qui fonctionne avec une grande différence de température avec l'air extérieur, permettant de dissiper une forte puissance thermique et participant donc pour une grande part à diminuer la température des gaz EGR et de l'air de suralimentation ;
- d'utiliser les puissances thermiques dissipées par les parties haute température des moyens d'échange thermique pour le chauffage ou le préchauffage d'organes du Groupe Moto-Propulseur ou de l'habitacle via l'aérotherme ; et,
- de diminuer l'impact thermique du radiateur basse température placé en amont du radiateur haute température, et éventuellement en amont du condenseur de climatisation dans le flux d'air.

Selon une autre particularité, les premiers moyens d'échange thermique et/ou les seconds moyens d'échange thermique comprennent en amont de la partie haute température une troisième partie très haute température, raccordée à un troisième circuit de refroidissement très haute température dans lequel circule un liquide très haute température, à une température supérieure à celle du liquide de refroidissement haute température, ledit troisième circuit de refroidissement comprenant une boucle équipée d'un radiateur très haute température et des moyens de circulation de fluide de refroidissement caloporteur très haute température. Sur un véhicule, la capacité d'évacuation des calories est limitée par le débit d'air traversant les radiateurs du dispositif de refroidissement. L'utilisation d'une troisième partie très haute température reliée à un troisième circuit très haute température permet d'augmenter la capacité d'évacuation des calories du dispositif de refroidissement sans augmenter le débit d'air.

L'utilisation de moyens d'échanges thermique séparés pour l'air d'admission et les gaz EGR procure en outre une grande flexibilité d'implantation. Avantageusement, les parties haute température sont raccordées séparément en parallèle à la boucle du circuit de refroidissement haute température. Selon un autre mode de réalisation, les parties haute température sont raccordées en série à la boucle du circuit de refroidissement haute température, le liquide de refroidissement haute température passant dans la partie haute température des premiers moyens d'échange puis dans celle des seconds moyens d'échange.

Avantageusement, les parties basse température sont raccordées séparément en parallèle à la boucle du circuit de refroidissement basse température et/ou les parties très haute température sont raccordées en parallèle à la boucle du circuit de refroidissement très haute température.

Selon un mode de réalisation, les premiers moyens d'échange thermique et/ou les seconds moyens d'échanges thermique sont constitués chacun d'un échangeur unique comprenant une entrée et une sortie pour le passage du flux de gaz à refroidir et une ou plusieurs cloisons de séparation fluidique définissant la partie haute température, la partie basse température et éventuellement la partie très haute température, chaque partie comprenant une entrée et une sortie pour son raccordement au circuit de refroidissement correspondant.

Avantageusement, le circuit de refroidissement haute température intègre différents organes du groupe moteur propulseur.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence au dessin schématique annexé, sur lequel :
- la figure 1 représente une vue schématique d'un dispositif de refroidissement de l'air de suralimentation et des gaz EGR d'un moteur à combustion interne suralimenté selon un premier mode de réalisation ;
- la figure 2 représente une vue schématique de côté d'un échangeur RAS du dispositif de refroidissement de la figure 1 ;
- la figure 3 représente une vue de côté d'un dispositif de refroidissement selon une variante de réalisation du premier mode;
- la figure 4 représente une vue schématique d'un dispositif de refroidissement selon un deuxième mode de réalisation ; et,
- la figure 5 représente une vue schématique de côté d'un échangeur EGR du dispositif de refroidissement de la figure 4.

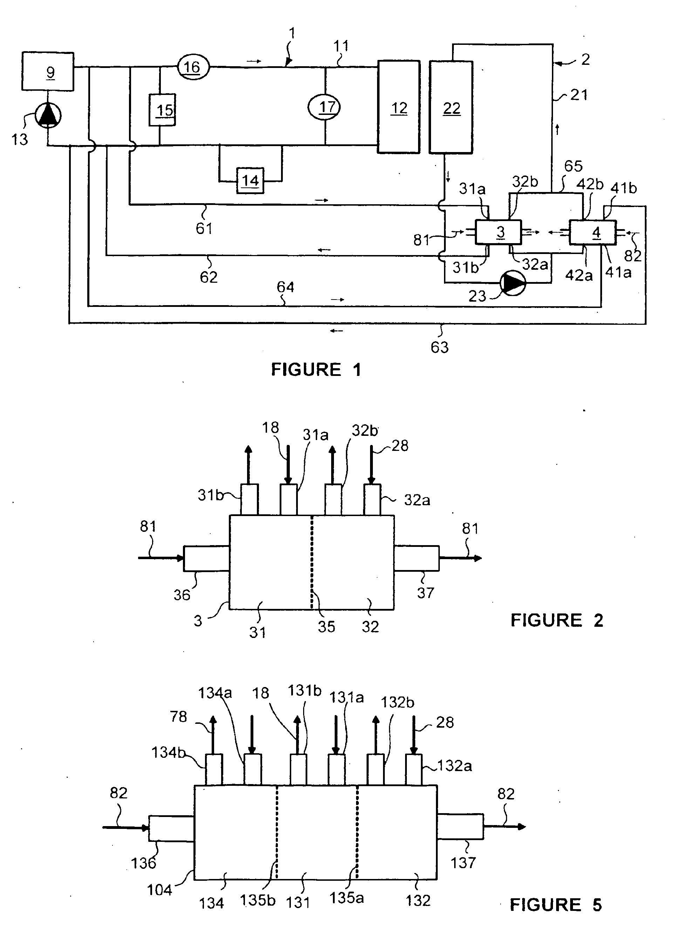

En référence à la figure 1, le système de refroidissement selon l'invention comprend deux circuits de refroidissement, un premier circuit de refroidissement, dit haute température 1, et un deuxième circuit de refroidissement, dit basse température 2. Le circuit haute température comprend, en série sur une boucle 11, le moteur 9, un radiateur de refroidissement à haute température 12, dit haute température ou HT, et une pompe mécanique ou électrique 13 pour la circulation dans le circuit d'un liquide caloporteur de refroidissement haute température, dit liquide HT. Ce circuit haute température intègre des organes du Groupe Moteur Propulseur pour les refroidir de manière conventionnelle à haute température, notamment les échangeurs eau-huile de lubrification 14 du moteur et de la boite de vitesse automatique et le radiateur de chauffage de l'habitacle ou aérotherme 15. La boucle 11 comprend également un thermostat 16 permettant de réguler la température du liquide HT, et un bocal de dégazage 17 permettant le remplissage et la régulation en pression du circuit. Le thermostat 16 peut être remplacé par une vanne électrique proportionnelle.

Le circuit basse température 2 comprend une boucle 21 intégrant un radiateur de refroidissement à basse température 22, dit radiateur basse température ou BT, et une pompe mécanique ou électrique 23 pour la circulation du liquide caloporteur de refroidissement basse température, dit liquide BT. Une liaison fluidique peut être prévue entre le circuit haute température et le circuit basse température pour effectuer simultanément le remplissage, le dégazage et la mise en pression des deux circuits. En l'absence d'une telle liaison fluidique, un bocal de dégazage est alors également intégré dans le circuit basse température.

Le liquide de refroidissement utilisé dans les circuits haute température et basse température est avantageusement un mélange d'eau et d'éthylène glycol, comportant par exemple des agents anticorrosion.

Le dispositif comprend un premier refroidisseur d'air de suralimentation 3, dit échangeur RAS, séparés en deux étages ou parties pour le refroidissement de l'air de suralimentation à deux niveaux de température. Suivant la figure 2, l'échangeur RAS 3 comprend une partie haute température 31, appelée également partie RAS/liquide HT, connectée au circuit haute température, dans laquelle circule le liquide HT 18, et une partie basse température 32, appelée également partie RAS/liquide BT, connectée au circuit basse température, dans laquelle circule le liquide BT 28. La séparation de l'échangeur en deux parties est réalisée par une cloison de séparation fluidique, représentée schématiquement sous la référence 35. L'échangeur RAS comprend une entrée amont 36 et une sortie aval 37 pour son montage en série sur le circuit d'air d'admission du moteur, de sorte que l'air de suralimentation 81 passe dans l'échangeur en traversant la partie haute température puis la partie basse température. La partie haute température comprend une entrée 31a et une sortie 31b connectées à la boucle du circuit de refroidissement haute température. Tel que représenté à la figure 1, l'entrée est connectée à ladite boucle en aval du moteur 9 par une canalisation 61 et la sortie est connectée à la boucle en amont de la pompe 13 par une canalisation 62. La partie basse température comprend une entrée 32a et une sortie 32b pour sa connexion en série sur la boucle 21, entre la pompe 23 et le radiateur BT 22, par exemple en aval de la pompe par rapport au sens de circulation du fluide BT.

Le refroidissement des gaz EGR est obtenu par un refroidisseur de gaz EGR 4, dit échangeur EGR, à deux niveaux de température, similaire de l'échangeur RAS, comprenant une partie haute température et une partie basse température. L'échangeur EGR comprend une entrée amont et une sortie aval pour le montage en série de l'échangeur EGR sur le circuit de gaz EGR du moteur, de sorte que les gaz EGR 82 traversent la partie haute température puis la partie basse température. La partie haute température est connectée par son entrée 41a et sa sortie 41b à la boucle du circuit haute température par des canalisations 63 et 64, parallèlement à la partie basse température de l'échangeur RAS. La partie basse température est connectée en série sur la boucle du circuit basse température, par son entrée 42a et sa sortie 42b (figure 1), les parties basse température des deux échangeurs étant montées en parallèle sur le circuit basse température par des canalisations 65.

En fonctionnement, l'air de suralimentation 81, entrant dans l'échangeur RAS à une température de l'ordre de 180-200 °C est refroidi par la première partie de l'échangeur RAS avec le liquide HT, qui est à une température de l'ordre de 90°C, puis par la deuxième partie de l'échangeur RAS avec le liquide BT, qui est à une température inférieure ou égale 50 °C. En sortie de l'échangeur RAS, l'air de suralimentation est à une température inférieure à 60°C. Les gaz EGR, entrant dans l'échangeur EGR à une température de l'ordre de 400 à 500 °C, sont refroidis par la première partie de l'échangeur EGR avec le liquide HT, puis par la deuxième partie de l'échangeur avec le liquide BT. En sortie de l'échangeur EGR, les gaz EGR sont à une température inférieure a 150°C.

L'échangeur EGR et l'échangeur RAS peuvent avantageusement comporter des by-pass d'échangeur afin de ne pas refroidir l'air d'admission ou les gaz EGR durant certaines phases de roulage du véhicule (démarrage à froid, régénération du filtre à particules). Le refroidissement de l'air de suralimentation et des gaz EGR peut également être diminué en diminuant le débit dans le circuit basse température via un pilotage de la pompe 23.

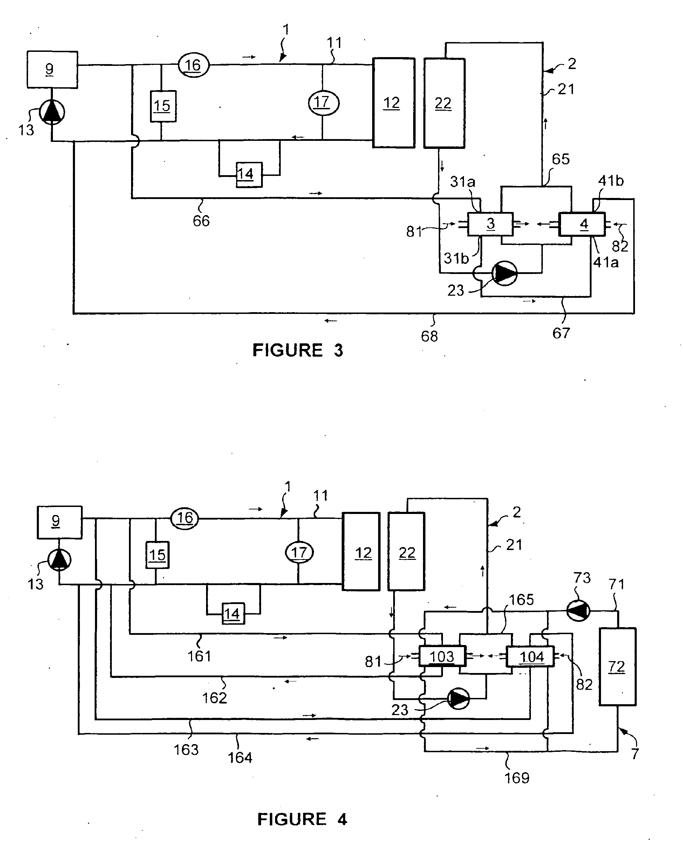

Dans l'exemple décrit en référence à la figure 1, les parties haute température des échangeurs RAS et EGR sont reliées séparément, en parallèle, sur la boucle du circuit haute température. La figure 3 illustre une variante de réalisation dans laquelle les parties haute température sont reliées en série au circuit haute température 1. L'entrée 31a de la partie haute température de l'échangeur RAS est connectée par une canalisation 66 au circuit haute température, en aval du moteur, et sa sortie 31b est connectée par une canalisation 67 à l'entrée 41a de la partie haute température de l'échangeur EGR, la sortie 41b de ce dernier étant connectée au circuit haute température par une canalisation 68, en amont de la pompe 13. Le fluide HT circule alors dans la partie haute température de l'échangeur RAS puis dans la partie haute température de l'échangeur EGR. Les parties basse températures des échangeurs EGR et RAS sont de préférence mises en parallèle dans le circuit basse température, mais tout autre agencement au sein du circuit basse température peut être envisagé.

Dans les exemples de réalisation décrits précédemment, chaque échangeur à deux niveaux de température est constitué d'un échangeur unique comprenant une cloison de séparation fluidique pour définir les parties haute et basse température. En variante, chaque échangeur à deux niveaux de température est réalisé en mettant en série 2 échangeurs gaz/liquide de refroidissement, avec d'amont en aval par rapport au flux de gaz, un premier échangeur gaz/liquide HT connecté au circuit haute température, puis un second échangeur gaz/liquide BT connecté au circuit basse température. Dans le cas des gaz EGR, la somme des pertes de charge sur les gaz EGR des deux échangeurs correspondra sensiblement à la perte de charge d'un échangeur EGR/liquide de refroidissement conventionnel, afin de ne pas diminuer le débit de gaz EGR à l'iso-ouverture des vannes EGR.

Dans le mode de réalisation illustré à la figure 4, le dispositif de refroidissement comprend un échangeur RAS 103 et un échangeur EGR 104 à trois niveaux de température. En référence à la figure 5, qui représente par exemple l'échangeur EGR, l'échangeur EGR comprend d'aval en amont, par rapport à la direction de passage des gaz EGR, une partie basse température 132 et une partie haute température 131 reliées respectivement au circuit basse température et au circuit haute température, et une troisième partie très haute température 134 reliée à un troisième circuit de refroidissement dit très haute température 7 dans lequel circule un liquide de refroidissement très haute température 78, dit liquide THT, les trois parties étant séparées par des cloisons de séparation fluidique 135a, 135b. Les gaz EGR, entrant dans l'échangeur RAS par l'entrée 136, sont refroidis par la partie très haute température, par la partie haute température, puis par la partie basse température, avant de ressortir par la sortie 137.

Le circuit très haute température 7 comprend une boucle 71 équipée d'un radiateur très haute température 72 THT et d'une pompe de circulation de fluide THT 73. Un liquide THT, par exemple de l'ordre de 150 °C, est obtenu en faisant circuler dans le circuit un liquide de refroidissement sous pression. L'utilisation d'une pression élevée permet de ne pas rencontrer de phénomène d'ébullition au sein de ce circuit très haute température.

Le montage des parties haute température et basse température 131, 132 des échangeurs RAS et EGR sur les circuits haute et basse température est réalisé comme dans le premier mode de réalisation, par leur entrée 131a, 132a et sortie 131b, 132b respectives, au moyen de canalisations 161, 162, 163, 164 et 165. Les parties très haute température des échangeurs sont montées en parallèle sur le circuit très haute température, via leur entrée 134a et sortie 134b respectives, en aval de la pompe 73, au moyen de canalisations 169.

Etant donné le niveau de température atteint au sein du circuit très haute température, le radiateur THT sera avantageusement installé en face avant du véhicule en aval du radiateur HT sur l'écoulement d'air, ou à un autre endroit sous le capot du véhicule où l'air ambiant ne dépasse pas 130 °C par exemple.

Dans le cas du circuit très haute température, le liquide de refroidissement peut être différent de celui utilisé dans le circuit haute température et le circuit basse température. A titre d'exemple, le liquide de refroidissement des circuits basse température et haute température est constitué d'un mélange d'eau et d'éthylène glycol, avec par exemple 40 % d'éthylène glycol, tandis que celui du circuit très haute température est constitué d'un mélange d'eau et d'éthylène glycol à 60 ou 80 %, ce qui permet alors de diminuer la pression du circuit et atteindre une pression plus conventionnelle de l'ordre de 1,5 bar, ou d'huile ou tout autre liquide supportant une pression et une température élevée, tel qu'un fluide dont le point d'ébullition est supérieur à 150 °C.

Le dispositif de refroidissement peut être adapté pour un moteur essence ou Diesel à double suralimentation et/ou pour le refroidissement de tout système ou organe nécessitant un contrôle de sa température de fonctionnement et/ou ayant un besoin de liquide de refroidissement le plus froid possible, tel que par exemple les composants électroniques de puissance et la machine électrique de traction implantés dans un véhicule hybride. Dans le cas du refroidissement d'un véhicule hybride, le dispositif de refroidissement comprend en plus des échangeurs EGR et RAS précités, un échangeur similaire à au moins deux niveaux de température pour l'électronique de puissance et un autre pour la machine électrique, les organes électrotechniques étant quant à eux intégrés uniquement dans le circuit à basse température.

Bien que l'invention ait été décrite en liaison avec différents modes de réalisation particuliers, il est bien évident qu'elle n'y est nullement limitée et qu'elle comprend tous les mode de réalisation dans le cadre de la revendication 1.

## Revendications

1. Dispositif de refroidissement de l'air d'admission d'un moteur et des gaz d'échappement recirculés émis par ledit moteur, notamment d'un moteur à combustion interne suralimenté, ledit dispositif comportant un premier circuit de refroidissement haute température, comprenant une boucle équipée d'un radiateur haute température et de moyens de circulation d'un liquide de refroidissement à haute température entre ledit radiateur haute température et le moteur, un deuxième circuit de refroidissement basse température, comprenant une boucle équipée d'un radiateur basse température et de moyens de circulation d'un liquide de refroidissement à basse température, et des moyens d'échange thermique entre d'une part lesdits liquides de refroidissement et d'autre part l'air d'admission et les gaz d'échappement recirculés, lesdits moyens d'échange thermique comprenant des premiers moyens d'échange thermique (3, 103) et des seconds moyens d'échanges thermiques (4, 104) séparés, destinés à être traversés
respectivement par l'air d'admission (81) et les gaz d'échappement recirculés (82), lesdits premiers et seconds moyens d'échange thermique comprenant chacun, d'amont en aval par rapport au flux gazeux le traversant, au moins une partie haute température (31, 131 ; 41), reliée par des premiers moyens de raccordement (61-68, 161-165) au circuit de refroidissement haute température, pour faire circuler dans ladite première partie le liquide de refroidissement haute température (18), et une partie basse température (32, 132, 42) reliée par des seconds moyens de raccordement (65, 165) au circuit de refroidissement basse température pour faire circuler dans ladite deuxième partie le liquide de refroidissement basse température (28), **caractérisé en ce que** les premiers moyens d'échange thermique (103) et/ou les seconds moyens d'échange thermique (104) comprennent en amont de la partie haute température (131) une troisième partie très haute température (134), raccordée à un troisième circuit de refroidissement très haute température (7) dans lequel circule un liquide très haute température (78), ledit troisième circuit de refroidissement comprenant une boucle (71) équipée d'un radiateur très haute température (72) et des moyens de circulation de liquide de refroidissement très haute température (73), les parties haute température (31, 131) étant reliées en série et raccordées à la boucle (11) du circuit de refroidissement haute température (1), le liquide de refroidissement haute température (18) passant dans la partie haute température des premiers moyens d'échange (3, 103) puis dans celle des second moyens d'échanges (4, 104), les parties très haute température (134) étant raccordées en parallèle à la boucle (71) du circuit de refroidissement très haute température (7), le circuit de refroidissement haute température intègrant différents organes (14, 15) du groupe moteur propulseur.

2. Dispositif de refroidissement selon la revendication 2, **caractérisé en ce que** les parties haute température (31) sont raccordées séparément en parallèle à la boucle (11) du circuit de refroidissement haute température (1).

3. Dispositif de refroidissement selon l'une des revendications 2 à 4, **caractérisé en ce que** les parties basse température (32, 132) sont raccordées séparément en parallèle à la boucle (21) du circuit de refroidissement basse température (2).

4. Dispositif de refroidissement selon l'une des revendications 3 à 6, **caractérisé en ce que** les premiers moyens d'échange thermique et/ou les seconds moyens d'échange thermique sont constitués chacun d'un échangeur unique (3, 4, 103, 104)) comprenant une entrée (36, 136) et une sortie (37, 137) pour le passage du flux de gaz à refroidir (81, 82) et une ou plusieurs cloisons de séparation fluidique (35, 135a, 135b) définissant la partie haute température (31, 131), la partie basse température (32, 132) et éventuellement la partie très haute température (134), chaque partie comprenant une entrée et une sortie pour son raccordement au circuit de refroidissement correspondant.

## Claims

1. Device for cooling intake air of an engine and recirculated exhaust gases emitted by said engine, in particular a supercharged internal combustion engine, said device comprising a first high-temperature cooling circuit, comprising a loop provided with a high-temperature radiator and means for circulating a high-temperature coolant between said high-temperature radiator and the engine, a second low-temperature cooling circuit, comprising a loop provided with a low-temperature radiator and means for circulating a low-temperature coolant, and means for heat exchange between, on the one hand, said coolants and, on the other hand, the intake air and the recirculated exhaust gases, said heat exchange means comprising first heat exchange means (3, 103) and second heat exchange means (4, 104) which are separate from one another, for the intake air (81) and the recirculated exhaust gases (82) to pass through respectively, said first and second heat exchange means each comprising, from upstream to downstream relative to the flow of gas flowing through, at least one high-temperature part (31, 131; 41) connected by first connection means (61-68, 161-165) to the high-temperature cooling circuit, to cause the high-temperature coolant (18) to circulate in said first part and a low-temperature part (32, 132, 42) connected by the second connection means (65, 165) to the low-temperature cooling circuit to cause the low-temperature coolant (28) to circulate in said second part, **characterized in that** the first heat exchange means (103) and/or the second heat exchange means (104) comprise, upstream of the high-temperature part (131), a third very high-temperature part (134) connected to a third very high-temperature cooling circuit (7) in which a very high-temperature liquid circulates (78), said third cooling circuit comprising a loop (71) provided with a very high-temperature radiator (72) and means for circulating very high-temperature coolant (73), the high-temperature parts (31, 131) being connected in series and connected to the loop (11) of the high-temperature cooling circuit (1), the high-temperature coolant (18) passing into the high-temperature part of the first exchange means (3, 103), then into that of the second exchange means (4, 104), the very high-temperature parts (134) being connected in parallel to the loop (71) of the very high-temperature cooling circuit (7), and the high-temperature cooling circuit incorporating different members (14, 15) of the powertrain.

2. Cooling device according to Claim 1, **characterized in that** the high-temperature parts (31) are connected separately in parallel to the loop (11) of the high-temperature cooling circuit (1).

3. Cooling device according to one of Claims 1 or 2, **characterized in that** the low-temperature parts (32, 132) are connected separately in parallel to the loop (21) of the low-temperature cooling circuit (2).

4. Cooling device according to one of Claims 1 to 3, **characterized in that** the first heat exchange means and/or the second heat exchange means each consist of a single exchanger (3, 4, 103, 104) comprising an inlet (36, 136) and an outlet (37, 137) for the passage of the flow of gas to be cooled (81, 82) and one or more partitions for separating the fluid (35, 135a, 135b) defining the high-temperature part (31, 131), the low-temperature part (32, 132) and possibly the very high-temperature part (134), each part comprising an inlet and an outlet for the connection thereof to the corresponding cooling circuit.

## Patentansprüche

1. Vorrichtung zum Kühlen der Ansaugluft eines Motors und der aus dem Motor, insbesondere einem aufgeladenen Verbrennungsmotor, austretenden, rückgeführten Abgase, wobei die Vorrichtung einen ersten Hochtemperatur-Kühlkreislauf, der eine mit einem Hochtemperaturkühler und mit Einrichtungen für die Zirkulation eines Kühlmittels auf hoher Temperatur zwischen dem Hochtemperaturkühler und dem Motor ausgestattete Schleife enthält, einen zweiten Niedertemperatur-Kühlkreislauf, der eine mit einem Niedertemperaturkühler und mit Einrichtungen für die Zirkulation eines Kühlmittels auf niederer Temperatur ausgestattete Schleife enthält, und Wärmetauschereinrichtungen zwischen einerseits den Kühlmitteln und andererseits der Ansaugluft und den rückgeführten Abgasen aufweist, wobei die Wärmetauschereinrichtungen getrennte erste Wärmetauschereinrichtungen (3, 103) und zweite Wärmetauschereinrichtungen (4, 104) enthalten, die dazu bestimmt sind, von der Ansaugluft (81) bzw. von den rückgeführten Abgasen (82) durchquert zu werden, wobei die ersten und zweiten Wärmetauschereinrichtungen je von stromaufwärts nach stromabwärts bezüglich des sie durchquerenden Gasstroms mindestens einen Hochtemperaturbereich (31, 131; 41), der durch erste Anschlusseinrichtungen (61-68, 161-165) mit dem Hochtemperatur-Kühlkreislauf verbunden ist, um in dem ersten Bereich das Hochtemperaturkühlmittel (18) zirkulieren zu lassen, und einen Niedertemperaturbereich (32, 132, 42) enthalten, der über zweite Anschlusseinrichtungen (65, 165) mit dem Niedertemperatur-Kühlkreislauf verbunden ist, um in dem zweiten Bereich das Niedertemperatur-Kühlmittel (28) zirkulieren zu lassen, **dadurch gekennzeichnet, dass** die ersten Wärmetauschereinrichtungen (103) und/oder die zweiten Wärmetauschereinrichtungen (104) stromaufwärts vor dem Hochtemperaturbereich (131) einen dritten Höchsttemperaturbereich (134) enthalten, der an einen dritten Höchsttemperatur-Kühlkreislauf (7) angeschlossen ist, in dem ein Höchsttemperatur-Kühlmittel (78) zirkuliert, wobei der dritte Kühlkreislauf eine Schleife (71) enthält, die mit einem Höchsttemperaturkühler (72) und mit Einrichtungen (73) für die Zirkulation eines Höchsttemperatur-Kühlmittels ausgestattet ist, wobei die Hochtemperaturbereiche (31, 131) in Reihe verbunden und an die Schleife (11) des Hochtemperatur-Kühlkreislaufs (1) angeschlossen sind, wobei das Hochtemperatur-Kühlmittel (18) durch den Hochtemperaturbereich der ersten Tauschereinrichtungen (3, 103), dann durch denjenigen der zweiten Tauschereinrichtungen (4, 104) geht, wobei die Höchsttemperaturbereiche (134) parallel an die Schleife (71) des Höchsttemperatur-Kühlkreislaufs (7) angeschlossen sind, wobei der Hochtemperatur-Kühlkreislauf verschiedene Organe (14, 15) der Antriebseinheit umfasst.

2. Kühlvorrichtung nach Anspruch 1, **dadurch gekennzeichnet, dass** die Hochtemperaturbereiche (31) getrennt parallel an die Schleife (11) des Hochtemperatur-Kühlkreislaufs (1) angeschlossen sind.

3. Kühlvorrichtung nach einem der Ansprüche 1 oder 2, **dadurch gekennzeichnet, dass** die Niedertemperaturbereiche (32, 132) getrennt parallel an die Schleife (21) des Niedertemperatur-Kühlkreislaufs (2) angeschlossen sind.

4. Kühlvorrichtung nach einem der Ansprüche 1 bis 3, **dadurch gekennzeichnet, dass** die ersten Wärmetauschereinrichtungen und/oder die zweiten Wärmetauschereinrichtungen je aus einem einzigen Tauscher (3, 4, 103, 104) bestehen, der einen Eingang (36, 136) und einen Ausgang (37, 137) für den Durchgang des zu kühlenden Gasstroms (81, 82) und eine oder mehrere Trennwände (35, 135a, 135b) zur fluidischen Trennung enthält, die den Hochtemperaturbereich (31, 131), den Niedertemperaturbereich (32, 132) und ggf. den Höchsttemperaturbereich (134) definieren, wobei jeder Bereich einen Eingang und einen Ausgang für seinen Anschluss an den entsprechenden Kühlkreislauf enthält.
